# EUROPÄISCHE PATENTSCHRIFT

(11) **EP 1 484 882 B1**
(45) Veröffentlichungstag und Bekanntmachung des Hinweises auf die Patenterteilung: **09.08.2006**
(21) Anmeldenummer: 03090176.3
(22) Anmeldetag: 06.06.2003
(51) Int. Cl.: H04L 29/06

(54) **Verfahren zum Überwachen von Teilnehmerdiensten in einem Telekommunikationsnetz**
Method for tracking user services in a telecommunication network
Méthode pour le suivi des services des utilisateurs dans un réseau de télécommunications

(43) Veröffentlichungstag der Anmeldung: 08.12.2004
(73) Patentinhaber: SIEMENS AKTIENGESELLSCHAFT, 80333 München (DE)
(72) Erfinder: Wietfeld, Christian, Dr., 14612 Falkensee (DE)

(56) Entgegenhaltungen:
- EP-A- 1 251 669
- WO-A-02/41579

## Beschreibung

Die Erfindung betrifft ein Verfahren zum Überwachen von Datenübertragungen zwischen einem Dienstnutzerrechner eines Dienstnutzers und einem Dienstrechner.

In modernen Telekommunikationsnetzen (Internet, Telefonfestnetze oder Mobilfunknetze) ist es allgemein bekannt, Netzbenutzern eine Vielzahl von Diensten anzubieten. Bei solchen Diensten kann es sich beispielsweise um Sprachdatenübertragungsdienste handeln, aber auch um Dienste, die in der elektronischen Lieferung von Informationen (z. B. Nachrichten, Börsenkurse oder Bilder) oder in der elektronischen Bestellung von materiellen Gütern (z. B. Büchern) bestehen. Die verschiedenen Dienstanbieter solcher Dienste verfügen jeweils über Rechnersysteme (Dienstrechner), welche in der Lage sind, mit einem Rechner eines Dienstnutzers (Dienstnutzerrechner) zu kommunizieren. Diese Dienstrechner können innerhalb des Telekommunikationsnetzes angeordnet sein; sie können aber auch außerhalb des Telekommunikationsnetzes angeordnet und mit diesem verbunden sein. Dienstanbieter mit solchen außerhalb des Telekommunikationsnetzes angeordnet Dienstrechnern werden oftmals als "third party service provider" bezeichnet und unterliegen nicht der Kontrolle eines Betreibers des jeweiligen Telekommunikationsnetzes.
Über ein Telekommunikationsnetz können also eine Vielzahl von Nachrichten übermittelt werden, welche Dienstnutzungen betreffen.

Aus der europäischen Patentanmeldung EP 1 251 669 A1 ist ein Verfahren bekannt, bei dem bei einer Datenübertragung von einem Web-Server zu einem Personal Computer eine vorgegebene Datenübertragungsgüte (Quality of Service) realisiert wird unter Nutzung eines in einem Kommunikationsnetz angeordneten "caching servers" und eines "agent servers". Die Datenübertragungsgüte ist dabei von den übertragenen Daten und von persönlichen Merkmalen des Datenempfängers abhängig.

Der Erfindung liegt die Aufgabe zugrunde, ein Verfahren anzugeben, mit dem in einem Telekommunikationsnetz Informationen über die mittels des Telekommunikationsnetzes genutzten Dienste ermittelt werden können.

Diese Aufgabe wird erfindungsgemäß gelöst durch ein Verfahren zum Überwachen von Datenübertragungen in einem Telekommunikationsnetz zwischen einem Dienstnutzerrechner eines Dienstnutzers und einem Dienstrechner, wobei bei dem Verfahren auf eine Dienstanforderungsnachricht des Dienstnutzerrechners hin von einem nachrichtenflussbezogen zwischen dem Dienstnutzerrechner und dem den angeforderten Dienst anbietenden Dienstrechner angeordneten Zwischenknoten des Telekommunikationsnetzes eine Zwischenknoten-Dienstanforderungsnachricht zu dem Dienstrechner übertragen wird, daraufhin von dem Zwischenknoten eine Dienstnachricht des Dienstrechners empfangen wird, die Nutzdaten des angeforderten Dienstes und eine dem Dienst zugeordnete Dienstnutzungskenngröße enthält, wobei eine Dienstnutzungskenngröße verwendet wird, die ein Identitätsmerkmal des Dienstrechners, ein Identitätsmerkmal des angeforderten Dienstes und/oder eine dem Dienst zugeordnete Wertangabe enthält, von dem Zwischenknoten die Dienstnutzungskenngröße aus der Dienstnachricht ausgelesen und an ein zentrales Kenngrößenspeichersystem des Telekommunikationsnetzes übertragen wird, von dem Kenngrößenspeichersystem die Dienstnutzungskenngröße nutzerbezogen abgespeichert wird, und von dem Zwischenknoten die Nutzdaten zu dem Dienstnutzerrechner übertragen werden.
Mit diesem Verfahren wird es vorteilhafterweise ermöglicht, Dienstnutzungskenngrößen über die Nutzung verschiedenster Dienste zu sammeln. Dabei können auch solche Dienste berücksichtigt werden, die von technischen Einrichtungen außerhalb des Telekommunikationsnetzes erbracht werden, wobei diese Einrichtungen nicht der Kontrolle eines Telekommunikationsnetzbetreibers unterliegen.

Das Verfahren kann so ausgestaltet sein, dass anhand der abgespeicherten Dienstnutzungskenngrößen von dem Kenngrößenspeichersystem der Dienstnutzer einer Dienstnutzergruppe zugeordnet wird. Dabei kann anhand der Anzahl und/oder der Art der abgespeicherten Dienstnutzerkenngrößen von dem Kenngrößenspeichersystem der Dienstnutzer der Dienstnutzergruppe zugeordnet werden.
Dadurch wird es vorteilhafterweise ermöglicht, die Dienstnutzerrechner bzw. die zugehörigen Dienstnutzer nach der Art der Nutzung der Dienste zu Dienstnutzergruppen zusammenzufassen (Beispiele für solche Dienstnutzergruppen wären z.B. Nichtnutzer, Wenignutzer, Vielnutzer).

Das erfindungsgemäße Verfahren kann so ausgestaltet sein, dass von dem Zwischenknoten auf das Eintreffen der Dienstanforderungsnachricht hin der Dienstnutzer authentifiziert wird, von dem Kenngrößenspeichersystem eine Gruppeninformation über die dem Dienstnutzer zugeordnete Dienstnutzergruppe zu dem Zwischenknoten übertragen wird, von dem Zwischenknoten die Gruppeninformation der Zwischenknoten- Dienstanforderungsnachricht beigefügt wird, und die Gruppeninformation mit der Zwischenknoten-Dienstanforderungsnachricht zu dem Dienstrechner übertragen wird. Auf diese Art und Weise kann dem Dienstrechner direkt bei der Anforderung eines Dienstes übermittelt werden, zu welcher Nutzergruppe der Dienstabfordernde Nutzer gehört.

Das Verfahren kann so ablaufen, dass von dem Dienstrechner in Abhängigkeit von der empfangenen Gruppeninformation dienstnutzergruppenspezifische Nutzdaten für die Dienstnachricht bereitgestellt werden. Das Verfahren kann auch so ablaufen, dass von dem Dienstrechner in Abhängigkeit von der empfangenen Gruppeninformation dienstnutzergruppenspezifische Dienstnutzungskenngrößen für die Dienstnachricht bereitgestellt werden. Damit wird den Dienstrechnern und deren Dienstanbietern ermöglicht, dem jeweiligen Dienstnutzer gruppenabhängig besondere Dienstangebote ("premium content") anzubieten oder für eine Dienstnutzung gruppenindividuelle Dienstnutzungskenngrößen ("Bonuspunkte") zu vergeben.

Bei dem erfindungsgemäßen Verfahren kann eine Dienstnutzungskenngröße verwendet werden, die ein Identitätsmerkmal des Dienstrechners, ein Identitätsmerkmal des angeforderten Dienstes und/oder eine dem Dienst zugeordnete Wertangabe enthält. Damit wird dem Kenngrößenspeichersystem ein dienstindividuelles Sammeln und Abspeichern von Informationen über realisierte Dienstnutzungen ermöglicht.

Bei dem erfindungsgemäßen Verfahren können die in dem Kenngrößenspeichersystem abgespeicherten Dienstnutzungskenngrößen nach Ablauf einer vorgewählten Zeitspanne gelöscht werden. Dies hat den Vorteil, dass durch ältere und damit für das aktuelle Geschäft der Dienstanbieter uninteressantere Daten kein Speicherplatz des Kenngrößenspeichersystems belegt wird.

Bei dem erfindungsgemäßen Verfahren kann als Zwischenknoten-Dienstanforderungsnachricht eine nach HTTP-Vorgaben aufgebaute Nachricht verwendet werden, in deren HTTP-Header die Gruppeninformation übertragen wird. Bei dem Verfahren kann auch als Dienstnachricht eine nach HTTP-Vorgaben aufgebaute Nachricht verwendet werden, in deren HTTP-Header die Dienstnutzungskenngröße übertragen wird. Diese Ausgestaltung des erfindungsgemäßen Verfahrens ermöglicht es vorteilhafterweise, schnell und kostengünstig Dienstrechner für die Teilnahme an den erfindungsgemäßen Verfahren auszurüsten, da die Dienstrechner lediglich in der Lage sein müssen, Nachrichten in den bekannten HTTP-Format (Hyper Text Transfer Protocol) zu empfangen und zu senden.

Bei dem erfindungsgemäßen Verfahren können bei einer dienstnutzerseitigen Anforderung von Sonderdiensten von dem Zwischenknoten Sonder-Dienstnutzungskenngrößen empfangen werden, welche in dem Kenngrößenspeichersystem eine Löschung von dort abgespeicherten Dienstnutzungskenngrößen bewirken. Dies ermöglicht es, das erfindungsgemäße Verfahren zur Realisierung eines sog. Bonussystems zu nutzen, bei dem bei Vorliegen von als "Bonuspunkten" dienenden Dienstnutzungskenngrößen beispielsweise kostenfreie Dienste als Sonderdienste erbracht werden können.

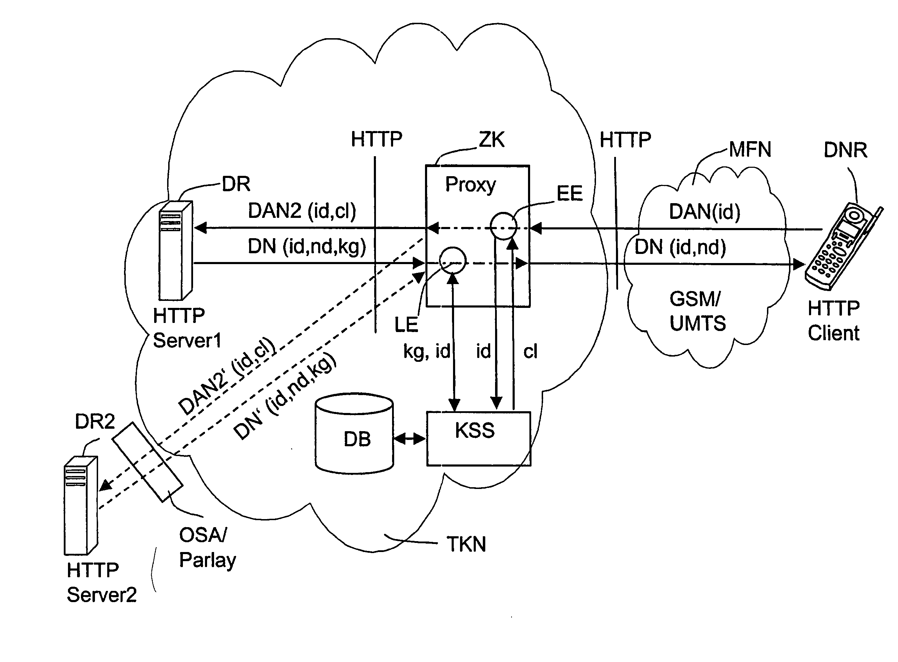

Zur weiteren Erläuterung der Erfindung ist in der einzigen Figur in einer schematischen Darstellung ein Beispiel von Verfahrensschritten des erfindungsgemäßen Verfahrens dargestellt.

In der Figur ist ein Dienstnutzerrechner in Form eines Mobiltelefons DNR dargestellt, mit dem ein Dienstnutzer einen Dienst (der beispielsweise in der elektronischen Lieferung eines Bildes besteht) von einem Dienstrechner DR anfordert. Dazu ist der Dienstnutzerrechner DNR über ein Mobilfunknetz MFN (beispielsweise über ein GSM- oder UMTS-Mobilfunknetz) mit einem Telekommunikationsnetz TKN verbunden. Bei dem Telekommunikationsnetz TKN kann es sich beispielsweise um das Internet oder um ein anderes Mobilfunknetz handeln. In einem weiteren Ausführungsbeispiel kann der Dienstnutzerrechner DNR auch direkt mit dem Telekommunikationsnetz TKN verbunden sein; in diesem Fall ist das zwischengeschaltete Mobilfunknetz MFN nicht notwendig. Auch kann es sich bei dem Dienstnutzerrechner DNR in einem weiteren Beispiel um einen Personal Computer oder um ein Notebook handeln, welches (ggf. über ein Zugangsnetz) mit dem Telekommunikationsnetz TKN verbunden ist.

Zur Anforderung eines Dienstes des Dienstrechners DR sendet der Dienstnutzerrechner DNR eine Dienstanforderungsnachricht DAN, welche als ein Identifikationsmerkmal id eine Mobilfunkrufnummer des Dienstnutzerrechners DNR enthält, an den Dienstrechner DR ab. Diese Dienstanforderungsnachricht DAN gelangt über das Mobilfunknetz MFN zu dem Telekommunikationsnetz TKN und erreicht dort einen Zwischenknoten ZK in Form eines Proxy-Rechners, der nachrichtenflussbezogen zwischen dem Dienstnutzerrechner DNR und dem Dienstrechner DR angeordnet ist. Der Zwischenknoten ZK ist mit einem Kenngrößenspeichersystem KSS des Telekommunikationsnetzes TKN verbunden. In einer an das Kenngrößenspeichersystem KSS angeschlossenen Datenbank DB sind Dienstnutzungskenngrößen für eine Vielzahl von Dienstnutzern gespeichert, wobei diese Dienstnutzer schon einmal in der Vergangenheit über den Zwischenknoten einen Dienst von einem Dienstrechner angefordert haben. Als eine solche Dienstnutzungskenngröße können beispielsweise eine oder mehrere der nachfolgend genannten Größen gespeichert sein: Ein Identitätsmerkmal (beispielsweise eine Internetadresse) des jeweiligen Dienstrechners, ein Identitätsmerkmal (z. B. "Bilderlieferungsdienst") eines angeforderten Dienstes und/oder eine einem solchen Dienst zugeordnete Wertangabe (z. B. Dienstwert 100 €, 200 Bonuspunkte). Diese Dienstnutzungskenngrößen werden nutzerindividuell in dem Kenngrößenspeichersystem KSS aufsummiert (z. B. können folgende Informationen in der Datenbank gespeichert sein: "der entsprechende Nutzer hat bereits 15 Mal Dienste des Dienstrechners DR benutzt, davon 7 Mal den "Bilderlieferungsdienst", er hat für die Bilderlieferungen 117 € bezahlt und dafür 234 Bonuspunkte erhalten"). Anhand dieser aufsummierten Dienstnutzungskenngrößen wird der Dienstnutzer bzw. der Dienstnutzerrechner DNR von dem Kenngrößenspeichersystem KSS einer Dienstnutzergruppe cl zugeordnet. So wird in diesem Ausführungsbeispiel der Dienstnutzerrechner DNR der Dienstnutzergruppe "Vielnutzer" zugeordnet, da für den Dienstnutzerrechner bereits mehr als 200 Bonuspunkte in dem Kenngrößenspeichersystem KSS aufsummiert sind. Ebenso kann in einem anderen Ausführungsbeispiel die Zuordnung derart gestaltet sein, dass ein Dienstnutzer dann zu einer Dienstnutzergruppe "Vielnutzer Bilderdienst" zugeordnet wird, sobald er 10 Mal den Dienst "Bilderdienst" angefordert hat.

Sobald die Dienstanforderungsnachricht DAN den Zwischenknoten ZK erreicht, wird von einer Erkennungseinheit EE des Zwischenknotens der Dienstnutzerrechner DNR bzw. der Dienstnutzer authentifiziert, d. h. seine Identität wird ermittelt. Dies geschieht im Ausführungsbeispiel dadurch, dass die Mobilfunkrufnummer id aus der Dienstanforderungsnachricht DAN ausgelesen und an das Kenngrößenspeichersystem KSS übermittelt wird. Anhand der Mobilfunkrufnummer id liest das Kenngrößenspeichersystem KSS den dem Dienstnutzer zugeordneten Eintrag aus der Datenbank DB aus, ermittelt die Dienstnutzergruppe ("Vielnutzer") und sendet eine Gruppeninformation cl über die dem Dienstnutzer zugeordnete Dienstnutzergruppe "Vielnutzer" an den Zwischenknoten ZK zurück. Der Zwischenknoten ZK fügt die Gruppeninformation cl in den Header der Dienstanforderungsnachricht DAN ein. Damit entsteht eine Zwischenknoten-Dienstanforderungsnachricht DAN2, die daraufhin von dem zwischenknoten ZK an den Dienstrechner DR übertragen wird.

Der Dienstrechner DR, bei dem es sich im Ausführungsbeispiel um einen HTTP-Server des Telekommunikationsnetzes TKN handelt, liest aus der Zwischenknoten-Dienstanforderungsnachricht DAN2 die Mobilfunkrufnummer id, die Gruppeninformation cl und Informationen über den angeforderten Dienst aus. Da der Dienstnutzer zu der Dienstnutzergruppe "Vielnutzer" gehört, stellt der Dienstrechner DR die angeforderten Bilddaten in einer besonders hohen Qualität (beispielsweise in einer hohen Auflösung) zur Verfügung. Diese Bilddaten stellen dienstnutzergruppenspezifische Nutzdaten dar, denn Bilder in dieser hohen Auflösung werden nur für "Vielnutzer" bereitgestellt. Da der Dienstnutzer der Dienstnutzergruppe "Vielnutzer" angehört, erhält er auch eine größere Anzahl an Bonuspunkten (beispielsweise drei Bonuspunkte pro € Umsatz) für seine Dienstanforderung gutgeschrieben, als sie z. B. ein Dienstnutzer der Dienstnutzergruppe "Wenignutzer" erhalten würde. Der Dienstrechner DR stellt also in Abhängigkeit von der empfangenen Gruppeninformation cl dienstnutzergruppenspezifische Dienstnutzungskenngrößen kg bereit, welche im Ausführungsbeispiel die Internetadresse des Dienstrechners DR, das Identitätsmerkmal "Bildlieferdienst hohe Auflösung" und die Wertangabe "12 €, 36 Bonuspunkte" des angeforderten Dienstes enthalten. Diese Daten werden als Dienstnutzungskenngröße kg zusammen mit den Bilddaten (Nutzdaten) nd mittels einer Dienstnachricht DN an die Mobilfunkrufnummer id des Dienstnutzerrechners DNR zurückgesendet. Als Dienstnachricht DN wird dabei eine nach HTTP-Vorgaben aufgebaute Nachricht verwendet, in deren Header die Dienstnutzungskenngröße kg übertragen wird.

Die Dienstnachricht DN gelangt zu dem Zwischenknoten ZK; in dem Zwischenknoten ZK wird von einer Leseeinheit LE die Dienstnutzungskenngröße kg und die Mobilfunkrufnummer id aus der Dienstnachricht DN ausgelesen und an das Kenngrößenspeichersystem KSS übermittelt. Mittels der Mobilfunkrufnummer id speichert das Kenngrößenspeichersystem KSS ausgewählte oder alle Größen der Dienstnutzungskenngröße kg in der Datenbank DB ab. Dabei werden die neuen 36 Bonuspunkte mit den bereits vorhandenen 234 Bonuspunkten addiert und die Gesamtsumme von 270 Bonuspunkten werden in der Datenbank DB gespeichert. Dadurch sind in einer zentralen Einheit (Kenngrößespeichersystem KSS mit Datenbank DB) des Telekommunikationsnetzes TKN Informationen über den Bildlieferungsdienst gespeichert, der über den Zwischenknoten ZK des Telekommunikationsnetzes TKN angefordert wurde. Schließlich werden die Nutzdaten nd in Form der Bilddaten hoher Auflösung von dem Zwischenknoten mittels der Dienstnachricht DN an den Dienstnutzerrechner DNR übermittelt. Damit ist die Diensterbringung für den Dienstnutzerrechner DNR abgeschlossen.

In einem weiteren Verfahrensablauf könnte der Dienstnutzerrechner DNR beispielsweise einen weiteren Dienst eines weiteren Dienstrechners DR2 anfordern, wobei sich dieser weitere Dienstrechner DR2 außerhalb des Telekommunikationsnetzes TKN befinden könnte. In diesem Fall würde der Zwischenknoten ZK eine der oben beschriebenen Zwischenknoten-Dienstanforderungsnachricht DAN2 ähnliche Zwischenknoten-Dienstanforderungsnachrichten DAN2' über ein OSA/Parlay-Gateway an den zweiten Dienstrechner DR2 senden. Zur Erbringung des Dienstes würde der zweite Dienstrechner DR2 daraufhin eine der oben beschriebenen Dienstnachricht DN ähnliche zweite Dienstnachricht DN' an den Zwischenknoten ZK zurücksenden. Die prinzipiellen Abläufe entsprächen dabei den oben dargestellten prinzipiellen Abläufen.

Die in dem Kenngrößenspeichersystem KSS abgespeicherten Dienstnutzungskenngrößen können gemeinsam mit einer Gültigkeitsdauer in der Datenbank DB abgespeichert sein. Nach Ablauf der vorgewählten Gültigkeitsdauer werden diese Dienstnutzungskenngrößen in der Datenbank gelöscht. Sobald für einen Nutzer bei dem Kenngrößenspeichersystem KSS eine vorgewählte Anzahl von Dienstnutzungskenngrößen abgespeichert sind (beispielsweise mindestens 100 Bonuspunkte), kann der Dienstnutzerrechner DNR einen Sonderdienst in Form einer kostenfreien Bildlieferung bei dem Dienstrechner DR anfordern. Gemeinsam mit den Nutzdaten (Gratisbild) dieses angeforderten Sonderdienstes sendet der Dienstrechner DR eine Sonder-Dienstnutzungskenngröße an den Zwischenknoten ZK, wobei die Sonder-Dienstnutzungskenngröße eine dem Sonder-Dienst zugeordnete negative Wertangabe (z. B. minus 100 Bonuspunkte) enthält. Diese Sonder-Dienstnutzungskenngröße wird in bekannter Weise zu dem Kenngrößenspeichersystem KSS übertragen und bewirkt bei ihrer Abspeicherung in der Datenbank DB bei der Aufsummierung der negativen Bonuspunkte auf die dort bereits abgespeicherten Bonuspunkte, dass 100 dort bereits abgespeicherte Bonuspunkte gelöscht werden. In dieser Ausgestaltungsform des Verfahrens lässt sich dieses zusätzlich zur Einlösung von Bonuspunkten in attraktive Sonderdienste nutzen.

Das erfindungsgemäße Verfahren weist eine Reihe von Vorteilen auf. Die Übertragung der Dienstnutzungskenngrößen erfolgt in den Headern von HTTP-Nachrichten im Rahmen des HTTP-Nachrichtenverkehrs ("inband-Datenübertragung"). Dadurch sind für die Übertragung der Dienstnutzungskenngrößen keine separaten Nachrichten und keine separaten Schnittstellen notwendig. Die Gruppeninformation über die den Dienstnutzer zugeordnete Dienstnutzergruppe wird ebenfalls als Teil des HTTP-Nachrichtenverkehrs an alle an dem Verfahren beteiligten Dienstrechner übertragen. Auch für diese Datenübertragung sind keine separaten Schnittstellen erforderlich. Die Dienstrechner können mit minimalem Aufwand in das Verfahren integriert werden, die Dienstrechner müssen nämlich lediglich HTTP-Nachrichten empfangen und senden können sowie das entsprechende Format des HTTP-Headers kennen, um die Gruppeninformation aus dem HTTP-Header der Zwischenknoten-Dienstanforderungsnachricht DAN2 auszulesen und die Dienstnutzungskenngröße kg in den Header der Dienstnachricht DN einzufügen.

Die Vergabe der Dienstnutzungskenngrößen erfolgt ausschließlich durch die Dienstrechner (Application-Server, HTTP-Server), so dass dafür kein Administrationsaufwand beim Betreiber des Kenngrößenspeichersystems entsteht. Neu auftretende Dienstnutzungskenngrößen von allen angeschlossenen Dienstrechnern DR, DR2 usw. werden zentral erfasst und ohne Zeitverzug direkt bei der Erbringung des Dienstes in der Datenbank DB gespeichert. Durch Anwendung von Sonder-Dienstnutzungskenngrößen können den Dienstnutzern attraktive Sonderdienste, wie beispielsweise "Gratisdienste gegen Kenngrößeneinlösung" erbracht werden. Da eine Überwachung der Datenübertragung eine Benutzung des Zwischenknotens ZK und damit eine Benutzung des Telekommunikationsnetzes TKN auch bei der Nutzung von externen Dienstrechnern (wie beispielsweise des Dienstrechners DR2) erfordert, wird darüber hinaus eine starke Kundenbindung des Dienstnutzers mit dessen Dienstnutzerrechner DNR an das Telekommunikationsnetz TKN erzeugt.

## Patentansprüche

1. Verfahren zum Überwachen von Datenübertragungen (DAN,DAN2,DN) in einem Telekommunikationsnetz (TKN) zwischen einem Dienstnutzerrechner (DNR) eines Dienstnutzers und einem Dienstrechner (DR, DR2), wobei bei dem Verfahren
- auf eine Dienstanforderungsnachricht (DAN) des Dienstnutzerrechners (DNR) hin von einem nachrichtenflussbezogen zwischen dem Dienstnutzerrechner (DNR) und dem den angeforderten Dienst anbietenden Dienstrechner (DR) angeordneten Zwischenknoten (ZK) des Telekommunikationsnetzes (TKN) eine Zwischenknoten-Dienstanforderungsnachricht (DAN2) zu dem Dienstrechner (DR) übertragen wird,
- daraufhin von dem Zwischenknoten (ZK) eine Dienstnachricht (DN) des Dienstrechners (DR) empfangen wird, die Nutzdaten (nd) des angeforderten Dienstes und eine dem Dienst zugeordnete Dienstnutzungskenngröße (kg) enthält, wobei eine Dienstnut zungskenngröße (kg) verwendet wird, die ein Identitätsmerkmal des Dienstrechners (DR), ein Identitätsmerkmal des angeforderten Dienstes und/oder eine dem Dienst zugeordnete Wertangabe enthält,
- von dem Zwischenknoten (ZK) die Dienstnutzungskenngröße (kg) aus der Dienstnachricht (DN) ausgelesen und an ein zentrales Kenngrößenspeichersystem (KSS) des Telekommunikationsnetzes übertragen wird,
- von dem Kenngrößenspeichersystem (KSS) die Dienstnutzungskenngröße (kg) nutzerbezogen abgespeichert (DB) wird, und
- von dem Zwischenknoten (ZK) die Nutzdaten (nd) zu dem Dienstnutzerrechner (DNR) übertragen werden.

2. Verfahren nach Anspruch 1,
**dadurch gekennzeichnet , dass**
- anhand der abgespeicherten Dienstnutzungskenngrößen (kg) von dem Kenngrößenspeichersystem (KSS) der Dienstnutzer einer Dienstnutzergruppe (c1) zugeordnet wird.

3. Verfahren nach Anspruch 2,
**dadurch gekennzeichnet , dass**
- anhand der Anzahl und/oder der Art der abgespeicherten Dienstnutzerkenngrößen (kg) von dem Kenngrößenspeichersystem (KSS) der Dienstnutzer der Dienstnutzergruppe (c1) zugeordnet wird.

4. Verfahren nach Anspruch 2 oder 3,
**dadurch gekennzeichnet , dass**
- von dem Zwischenknoten (ZK) auf das Eintreffen der Dienstanforderungsnachricht (DAN) hin der Dienstnutzer authentifiziert (id) wird,
- von dem Kenngrößenspeichersystem (KSS) eine Gruppeninformation (c1) über die dem Dienstnutzer zugeordnete Dienstnutzergruppe zu dem Zwischenknoten (ZK) übertragen wird,
- von dem Zwischenknoten (ZK) die Gruppeninformation (cl) der Zwischenknoten-Dienstanforderungsnachricht (DAN2) beigefügt wird, und
- die Gruppeninformation (cl) mit der Zwischenknoten-Dienstanforderungsnachricht (DAN2) zu dem Dienstrechner (DR) übertragen wird.

5. Verfahren nach Anspruch 4,
**dadurch gekennzeichnet , dass**
- von dem Dienstrechner (DR) in Abhängigkeit von der empfangenen Gruppeninformation (cl) dienstnutzergruppenspezifische Nutzdaten (nd) für die Dienstnachricht (DN) bereitgestellt werden.

6. Verfahren nach Anspruch 4 oder 5,
**dadurch gekennzeichnet, dass**
- von dem Dienstrechner (DR) in Abhängigkeit von der empfangenen Gruppeninformation (c1) dienstnutzergruppenspezifische Dienstnutzungskenngrößen (kg) für die Dienstnachricht (DN) bereitgestellt werden.

7. Verfahren nach einem der vorhergehenden Ansprüche,
**dadurch gekennzeichnet , dass**
- die in dem Kenngrößenspeichersystem (KSS) abgespeicherten Dienstnutzungskenngrößen (kg) nach Ablauf einer vorgewählten Zeitspanne gelöscht werden.

8. Verfahren nach einem der vorhergehenden Ansprüche,
**dadurch gekennzeichnet , dass**
- als Zwischenknoten-Dienstanforderungsnachricht (DAN2) eine nach HTTP-Vorgaben aufgebaute Nachricht verwendet wird, in deren HTTP-Header die Gruppeninformation (c1) übertragen wird.

9. Verfahren nach einem der vorhergehenden Ansprüche,
**dadurch gekennzeichnet , dass**
- als Dienstnachricht (DN) eine nach HTTP-Vorgaben aufgebaute Nachricht verwendet wird, in deren HTTP-Header die Dienstnutzungskenngröße (kg) übertragen wird.

10. Verfahren nach einem der vorhergehenden Ansprüche,
**dadurch gekennzeichnet , dass**
- bei einer dienstnutzerseitigen (DNR) Anforderung von Sonderdiensten von dem Zwischenknoten (ZK) Sonder-Dienstnutzungskenngrößen empfangen werden, welche in dem Kenngrößenspeichersystem (KSS) eine Löschung von dort abgespeicherten Dienstnutzungskenngrößen (kg) bewirken.

## Claims

1. Method for monitoring data transmissions (DAN, DAN2, DN) in a telecommunication network (TKN) between a service user computer (DNR) belonging to a service user and a service computer (DR, DR2), in where the method involves
- a service request message (DAN) from the service user computer (DNR) prompting an intermediate node (ZK) in the telecommunication network (TKN), which intermediate node is arranged, in terms of message flow, between the service user computer (DNR) and the service computer (DR) providing the requested service, to transmit an intermediate-node service request message (DAN2) to the service computer (DR),
- the intermediate node (ZK) then receiving a service message (DN) from the service computer (DR), which service message contains user data (nd) for the requested service and a service use parameter (kg) associated with the service, with a service use parameter (kg) being used which contains an identity feature for the service computer (DR), an identity feature for the requested service and/or a value statement associated with the service,
- the intermediate node (ZK) reading the service use parameter (kg) from the service message (DN) and transmitting it to a central parameter storage system (KSS) in the telecommunication network,
- the parameter storage system (KSS) storing the service use parameter (kg) on a user related basis, and
- the intermediate node (ZK) transmitting the user data (nd) to the service user computer (DNR).

2. Method according to Claim 1,
**characterized in that**
- the stored service use parameters (kg) are used by the parameter storage system (KSS) to assign the service user to a service user group (cl).

3. Method according to Claim 2,
**characterized in that**
- the number and/or type of stored service user parameters (kg) is/are used by the parameter storage system (KSS) to assign the service user to the service user group (cl).

4. Method according to Claim 2 or 3,
**characterized in that**
- the intermediate node (ZK) authenticates (id) the service user upon the arrival of the service request message (DAN),
- the parameter storage system (KSS) transmits a group information item (cl) about the service user group associated with the service user to the intermediate node (ZK),
- the intermediate node (ZK) appends the group information item (cl) to the intermediate-node service request message (DAN2), and
- the group information item (cl) is transmitted to the service computer (DR) with the intermediate-node service request message (DAN2).

5. Method according to Claim 4,
**characterized in that**
- the service computer (DR) provides service-user group specific user data (nd) for the service message (DN) on the basis of the group information item (cl) received.

6. Method according to Claim 4 or 5,
**characterized in that**
- the service computer (DR) provides service-user group specific service use parameters (kg) for the service message (DN) on the basis of the group information item (cl) received.

7. Method according to one of the preceding claims,
**characterized in that**
- the service use parameters (kg) stored in the parameter storage system (KSS) are deleted after a preselected time period has elapsed.

8. Method according to one of the preceding claims,
**characterized in that**
- the intermediate-node service request message (DAN2) is a message which is based on HTTP stipulations and whose HTTP header is used to transmit the group information item (cl).

9. Method according to one of the preceding claims,
**characterized in that**
- the service message (DN) used is a message which is based on HTTP stipulations and whose HTTP header is used to transmit the service use parameter (kg).

10. Method according to one of the preceding claims,
**characterized in that**
- a service user (DNR) request for special services involves the intermediate node (ZK) receiving special service use parameters which prompt the parameter storage system (KSS) to delete service use parameters (kg) which are stored therein.

## Revendications

1. Procédé pour surveiller des transmissions de données (DAN, DAN2, DN) dans un réseau de télécommunications (TKN) entre un ordinateur d'utilisateur de services (DNR) d'un utilisateur de services et un ordinateur de services (DR, DR2), dans lequel
- suite à un message de demande de service (DAN) de l'ordinateur d'utilisateur de services (DNR), un noeud intermédiaire (ZK) du réseau de communication (TKN) qui est placé par rapport au flux des messages entre l'ordinateur d'utilisateur de services (DNR) et l'ordinateur de services (DR) offrant le service demandé transmet un message de demande de service de noeud intermédiaire (DAN2) à l'ordinateur de services (DR),
- ensuite, le noeud intermédiaire (ZK) reçoit un message de service (DN) de l'ordinateur de services (DR) qui contient des données utiles (nd) du service demandé et une grandeur caractéristique d'utilisation de service (kg) associée au service, la grandeur caractéristique d'utilisation de service (kg) qui est utilisée contenant alors un identificateur de l'ordinateur de services (DR), un identificateur du service demandé et/ou une indication de valeur associée au service,
- le noeud intermédiaire (ZK) lit la grandeur caractéristique d'utilisation de service (kg) dans le message de service (DN) et la transmet à un système central de mémorisation de grandeurs caractéristiques (KSS) du réseau de télécommunications,
- le système de mémorisation de grandeurs caractéristiques (KSS) mémorise (DB) par rapport à l'utilisateur la grandeur caractéristique d'utilisation de service (kg), et
- le noeud intermédiaire (ZK) transmet les données utiles (nd) à l'ordinateur d'utilisateur de services (DNR).

2. Procédé selon la revendication 1,
**caractérisé par le fait que**,
- à l'aide des grandeurs caractéristiques d'utilisation de service (kg) mémorisées, le système de mémorisation de grandeurs caractéristiques (KSS) associe l'utilisateur de services à un groupe d'utilisateurs de services (c1).

3. Procédé selon la revendication 2,
**caractérisé par le fait que**,
- à l'aide du nombre et/ou du type des grandeurs caractéristiques d'utilisation de service (kg) mémorisées, le système de mémorisation de grandeurs caractéristiques (KSS) associe l'utilisateur de services à un groupe d'utilisateurs de services (cl).

4. Procédé selon la revendication 2 ou 3,
**caractérisé par le fait que**
- à l'arrivée du message de demande de service (DAN), le noeud intermédiaire (ZK) authentifie (id) l'utilisateur de services,
- le système de mémorisation de grandeurs caractéristiques (KSS) transmet au noeud intermédiaire (ZK) une information de groupe (cl) concernant le groupe d'utilisateurs de services associé à l'utilisateur de services,
- le noeud intermédiaire (ZK) joint l'information de groupe (cl) au message de demande de service de noeud intermédiaire (DAN2), et
- on transmet l'information de groupe (cl) avec le message de demande de service de noeud intermédiaire (DAN2) à l'ordinateur de services (DR).

5. Procédé selon la revendication 4,
**caractérisé par le fait que**,
- en fonction de l'information de groupe (cl) reçue, l'ordinateur de services (DR) fournit des données utiles (nd) spécifiques au groupe d'utilisateurs de services pour le message de service (DN).

6. Procédé selon la revendication 4 ou 5,
**caractérisé par le fait que**,
- en fonction de l'information de groupe (cl) reçue, l'ordinateur de services (DR) fournit des grandeurs caractéristiques d'utilisation de service (kg) spécifiques au groupe d'utilisateurs de services pour le message de service (DN).

7. Procédé selon l'une des revendications précédentes,
**caractérisé par le fait que**
- l'on efface les grandeurs caractéristiques d'utilisation de service (kg) mémorisées dans le système de mémorisation de grandeurs caractéristiques (KSS) après l'expiration d'un délai présélectionné.

8. Procédé selon l'une des revendications précédentes,
**caractérisé par le fait que**,
- comme message de demande de service de noeud intermédiaire (DAN2), on utilise un message qui est construit selon les règles HTTP et dans l'en-tête HTTP duquel l'information de groupe (cl) est transmise.

9. Procédé selon l'une des revendications précédentes,
**caractérisé par le fait que**,
- comme message de service (DN), on utilise un message qui est construit selon les règles HTTP et dans l'en-tête HTTP duquel la grandeur caractéristique d'utilisation de service (kg) est transmise.

10. Procédé selon l'une des revendications précédentes,
**caractérisé par le fait que**,
- dans le cas d'une demande de services spéciaux du côté de l'utilisateur de services (DNR), le noeud intermédiaire (ZK) reçoit des grandeurs caractéristiques d'utilisation de services spéciaux qui provoquent dans le système de mémorisation de grandeurs caractéristiques (KSS) un effacement de grandeurs caractéristiques d'utilisation de services (kg) qui y sont mémorisées.
